# EUROPEAN PATENT SPECIFICATION

(11) **EP 3 736 111 B1**
(45) Date of publication and mention of the grant of the patent: **20.10.2021**
(21) Application number: 20172931.6
(22) Date of filing: 05.05.2020
(51) Int. Cl.: B29C 64/153, B29C 64/245, B29C 64/393, B33Y 10/00, B33Y 30/00, B33Y 40/00, B33Y 50/02, B22F 3/105, B22F 10/20, B22F 12/00

(54) **SYSTEM FOR ALIGNING LASER SYSTEM TO A CARRIER PLATE**
SYSTEM ZUR AUSRICHTUNG EINES LASERSYSTEMS AUF EINE TRÄGERPLATTE
SYSTÈME D'ALIGNEMENT DE SYSTÈME LASER À UNE PLAQUE DE SUPPORT

(30) Priority: 09.05.2019 EP 19173553
(43) Date of publication of application: 11.11.2020
(73) Proprietor: LayerWise N.V., 3001 Heverlee (BE)
(72) Inventor: Coeck, Sam, 3370 Vertrijk (BE); Van Vaerenbergh, Jonas, 9100 Nieuwkerken-Waas (BE)
(74) Representative: dompatent von Kreisler Selting Werner - Partnerschaft von Patent- und Rechtsanwälten mbB

(56) References cited:
- EP-A1- 3 084 129
- EP-A1- 3 159 080
- DE-A1-102012 011 217
- DE-B3-102017 202 725
- US-A1- 2019 047 228

## Description

### Field of the Invention

The present disclosure concerns an apparatus and method for the fabrication of three dimensional (3D) articles utilizing powder materials. More particularly, the present disclosure concerns an apparatus and method for precisely aligning a laser system to a pre-fabricated body in order to precisely manufacture an article.

### Background

Three dimensional (3D) printing systems are in rapidly increasing use for purposes such as prototyping and manufacturing. One type of three dimensional printer utilizes a layer-by-layer process to form a three dimensional article of manufacture from powdered materials. Each layer of powdered material is selectively fused using an energy beam such as a laser, electron, or particle beam. In a typical system, absolute alignment of the energy beam is not critical. For some types of fabrication there is a need to precisely align the energy beam to a prefabricated article. Conventional systems generally don't provide precise absolute alignment that is required.

US2019/0047228A1 discloses a method of calibrating a scanner of an additive manufacturing apparatus, in which an energy beam is directed with the scanner to consolidate material in a working plane to build up a workpiece in a layer-by-layer manner, the method comprising directing the energy beam with the scanner across a test surface in the working plane to form a test pattern, the test pattern comprising at least one periodic feature, capturing an image of the test pattern, determining from the image a periodic property of the test pattern and determining correction data for control of the scanner based upon the periodic property.

EP3159080A1 discloses a method of adjusting a powder bed manufacturing apparatus comprising the steps of:
- disposing a substrate structure on a base, wherein the base comprises at least one reference feature,
- recording image data of the at least one reference feature and the substrate structure,
- determining a position of the substrate structure on the base by a recognition procedure and by means of the image data, and
- aligning of a laser beam of the powder bed manufacturing apparatus to the position of the substrate structure.

### Brief Description of the Figures

FIG. 1 is a side schematic view of a three-dimensional printing system for manufacturing a three-dimensional article.
FIG. 2 is a top schematic view of a carrier plate with receptacles and alignment targets.
FIG. 3A depicts a cross-hatched scan pattern of a radiation beam over an upper surface of carrier plate.
FIG. 3B depicts a reflected signal versus position for the scan pattern of FIG. 3A. Scanning has occurred over a circular target which is non-reflective.
FIG. 4 is a flowchart of an embodiment of a method of manufacturing a three-dimensional article.
FIG. 5 is a flowchart of an embodiment of a method that defines a more particular example of some steps from FIG. 4.
FIG. 6A is a graphical plot to illustrate rescaled error points for targets.
FIG. 6B is a graphical plot to illustrate rescaled error points for receptacles.

### Summary

The first aspect of the disclosure is a three-dimensional printing system according to claim 1.

In one implementation the receptacle is a recess formed into the upper surface of the carrier plate. The recess can further define an opening that passes through the carrier plate to facilitate removal of residual powder.

In another implementation the receptacle includes a plurality of datum surfaces for engaging and aligning outer surfaces of the prefabricated body. The datum surfaces can include one or more of edges of a recess and upstanding posts.

In yet another implementation the receptacle includes a plurality of receptacles arranged across the upper surface of the carrier plate. The receptacles can be identical to each other or can vary in geometry.

In a further implementation, the alignment targets are openings formed into the carrier plate. The openings can be circular or can have other geometries. The openings can pass through the carrier plate to facilitate removal of residual powder. Alternatively, the openings can be recesses formed into the carrier plate. The recesses can include lower surfaces with radiation-absorbing material.

In a yet further implementation, the sensor is above the carrier plate. The sensor can include a plurality or array of sensors. A protective enclosure can protect the laser system and sensors from an environment of the build chamber. The protective enclosure can include pass through windows and/or optics to allow radiation to pass from the laser system to a build plate (or build plane) and to allow reflected light to reach the sensor.

According to the invention, the laser system is operated with at least two power levels including a low power level and a high power level. The laser system is operated at the low power level while the sensor is capturing reflected light. The low power level is not capable of fusing powder. The laser is operated at a high power level when layers of metal are selectively fused onto the prefabricated body. In one embodiment, the lower power level is less than 100 watts. The lower power level can be in a range of 50 to 60 watts. The high power level can be more than 200 watts, or approximately 500 watts or approximately 1000 watts or in a range between 200 and 1000 watts.

In yet another implementation the radiation beam is scanned in a cross-hatch pattern over the alignment targets. The alignment targets modulate reflection of the radiation beam. The modulation is analyzed to determine target location relative to the beam scanning. This in turn allows the laser system to be aligned to the receptacle.

In a further implementation the alignment targets are openings. Analyzing the signal includes finding points along edges of the openings and then computing a location in relation to the openings. The openings can be circular. Analyzing for a circle includes finding points along an edge of the circle and then using the point locations to compute a center location of the circle. The computed location is utilized to align the laser system to the receptacle.

In a yet further implementation, the controller stores "expected" locational coordinates (Xₑₓₚ and Yₑₓₚ) of the receptacles and targets. From operating the laser system and receiving the signal from the sensor, the controller determines measured locational coordinates (Xₘ and Yₘ) for the targets. The controller determines a coordinate transformation based upon a difference between the measured locational coordinates (Xₘ and Yₘ) and the expected locational coordinates (Xₑₓₚ and Yₑₓₚ) for the targets. The controller then uses the coordinate transformation to convert expected locational coordinates upon the body to coordinates for directing the laser system for selectively fusing layers of powder onto the body.

The second aspect of the disclosure is a method of manufacturing a three-dimensional article according to claim 8.

In one implementation, loading the prefabricated body into the receptacle includes engaging outer surfaces of the prefabricated body with receptacle datum surfaces.

In another implementation, loading the prefabricated body includes loading a plurality of the prefabricated bodies into a corresponding plurality of receptacles across the upper surface of the carrier plate.

In yet another implementation scanning the radiation beam includes generating the radiation beam at a reduced or low power level that is generally below a power level used to fuse powder. Operating the laser system to selectively form layers of material includes generating the radiation beam at an increased or high power that is above or greater than the reduced or low power level. For metal materials, the lower power level can be less than about 100 watts or in a range of about 50 to 60 watts. The high powder level can be 100 to 5000 watts, or more particularly about 200 to 1000 watts.

In a further implementation the targets are holes formed in the carrier plate. Finding locations of targets includes finding points along the edges of the holes and then computing the locations from the point locations. The holes can be circular and the locations can be centers of the circles.

In a yet further implementation finding locations of targets includes finding locations of at least three or at least four or at least six openings formed into the carrier plate.

In a third aspect of the disclosure, according to the invention, a three-dimensional printing system for manufacturing a three-dimensional article includes a build chamber, a carrier plate, a vertical positioning apparatus, a laser system, a sensor, located above the carrier plate, a powder dispenser, and a controller. The carrier plate defines a receptacle and an alignment target. The receptacle is formed into an upper surface of the carrier plate for receiving and aligning a prefabricated body. The alignment target includes a plurality of openings formed into the carrier plate and in precise alignment with the receptacle. The controller is configured to: operate the laser system at an initial low power to generate and scan a radiation beam over an upper surface of the carrier plate; concurrent with scanning the radiation beam, receive a signal from the sensor; analyze the signal to align the radiation beam to the pre-fabricated body, analyzing includes identifying points along edges of the openings and computing locations of the openings from the identified points; operate the vertical positioning apparatus, the laser system, and the powder dispenser to selectively form layers of metal over the prefabricated body to complete manufacture of the three-dimensional article, the laser system is operated at a high power level that is greater than the low power level during the selective formation.

### Detailed Description of the Preferred Embodiments

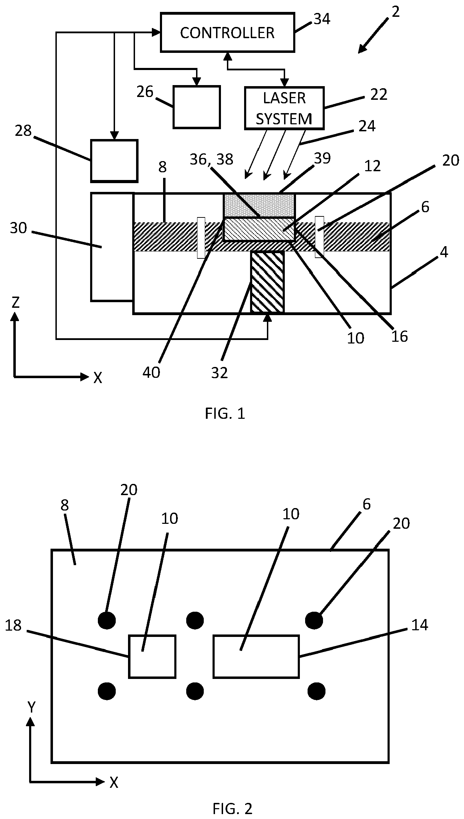

FIG. 1 is a side view schematic diagram of a three-dimensional printing system 2. In describing system 2, mutually orthogonal axes X, Y, and Z can be used. Axes X and Y are lateral axes and generally horizontal. Axis Z is a vertical axis that is generally aligned with a gravitational reference. By "generally" we mean that a measure such as a quantity, a dimensional comparison, or an orientation comparison is by design and within manufacturing tolerances but as such may not be exact.

System 2 includes a build chamber 4 containing a carrier plate 6. A top view of an embodiment of carrier plate 6 is illustrated in FIG. 2. Carrier plate 6 has an upper surface 8 which defines one or more receptacles 10. In the illustrated embodiment carrier plate 6 has two receptacles 10 but it is to be understood that carrier plate 6 can have any practical number of receptacles 10.

The receptacle 10 is configured to receive and hold a prefabricated body 12 in alignment. Prefabricated body 12 can be made from various processes such as metal casting, injection molding, machining, and/or etching before it is placed into receptacle 10. Receptacle 10 includes datum surfaces 14 that engage and align corresponding surfaces 16 of prefabricated body 12. The engagement aligns the prefabricated body in X, Y, and theta-Z (angular alignment about the Z-axis) relative to the carrier plate 6.

In an illustrative embodiment, receptacle 10 is a blind recess 10 that is formed partially through the carrier plate 6. Edges 18 of the recess 10 can function as datum surfaces 14. Alternatively, the receptacle 10 can include other features such as posts that provide the datum surfaces 14. In yet other embodiments, the receptacle 10 can include or define holes that pass completely through the carrier plate 6 for purposes such as facilitating cleaning powder from the carrier plate 6.

The carrier plate 6 also includes two or more alignment targets 20. In a more particular embodiment, the carrier plate 6 includes three or more alignment targets 20. In a yet more particular embodiment, the carrier plate 6 includes four or more alignment targets 20. In the illustrated embodiment, the carrier plate 6 includes six alignment targets 20. More alignment targets 20 can be preferred in order to improve measurement statistical accuracy.

The alignment targets 20 are separated from or spaced apart from the receptacle 10. Thus, even if the prefabricated body 12 is received in the receptacle 10, alignment of the carrier plate 6 can be performed. In particular, due to the separated configuration of the alignment targets 20 and the receptacle 10, light from the laser beam of the laser system 22 can illuminate the alignment targets 20 even if the prefabricated body 12 is received in the receptacle 10 for alignment of the receptacle 10 as described below.

In the illustrated embodiment, the alignment targets 20 are circular holes 20 that are formed through the carrier plate 6. In other embodiments, the alignment targets 20 can have other shapes such as square, rectangular, triangular, polygonal, cross-shaped, or irregular. In yet other embodiments, the alignment targets 20 can be blind holes having radiation absorbing lower surfaces. The circular holes 20 of the illustrated embodiment pass completely through the carrier plate 6. This has an advantage that powder will not accumulate in the targets 20. Circular shapes can be drilled and reamed with high precision.

The locations of the alignment targets 20 in relation to the receptacles 10 are precisely measured and known. The controller 34 stores information indicative of a map of the relative locations between targets 20 and receptacles 10. The stored information can include "expected coordinates" (Xₑₓₚ and Yₑₓₚ) of the receptacles 10 and targets 20.

A laser system 22 is configured to generate and scan one or more radiation beams 24 across the upper surface 8 of the carrier plate 6. Laser system 22 is operated in at least two power levels including a high power level for fusing powder and a low power level that may be less capable of fusing powder. The low power level is used for alignment purposes and is just high enough in power to provide sufficient reflected radiative power for measurement. The low power level can be less than 100 watts or in a range of 50 to 60 watts. Other power levels can be used that are in a range of up to about 100 watts. Yet other power levels for measurement may be higher than 100 watts for some systems.

A sensor 26 is disposed above the carrier plate 6. Sensor 26 is configured to receive low power radiation from the laser system 22 that is reflected from the upper surface 8. In some embodiments, sensor 26 includes a plurality of sensors 26 at various locations above the carrier plate 6. Signals from a plurality of sensors 26 can be combined to improve accuracy of the system in determining locations based upon the sensor information.

A powder dispenser 28 is configured to dispense layers of unfused powder upon the upper surface 8. Excess powder can be received by overflow chamber 30 during a powder dispensing process. A vertical positioning apparatus 32 is configured to controllably adjust a height of the upper surface 8. In an illustrative embodiment, the powder dispenser 28 is configured to dispense metal powder such as titanium alloy, steel, nickel alloy, cobalt alloy or an aluminum alloy to name some examples. In other embodiments, the system 2 is configured to utilize polymer powders.

For metal powders, the high laser power required to melt and fuse the powder is typically at least about 100 watts. Generally, the high laser power can be in a range of 100 to 5000 watts. In more particular examples, the high laser power can be in a range of 200 to 1000 watts. Specific examples of high laser powers can be about 500 watts or 1000 watts. The highest power levels can cause wear and/or damage to the carrier plate 6 and sensor 26 when used for alignment purposes without dispensed powder.

For polymer powders, the power levels are much lower for powder fusion. For these systems it may be preferable to fuse powder and provide alignment using the same power level.

A controller 34 is electrically coupled to the laser system 22, sensor 26, powder dispenser 28, and the vertical positioning apparatus 32. The controller includes a processor coupled to an information storage device. The controller 34 includes a processor coupled to a computer-readable storage apparatus. The computer-readable storage apparatus includes a non-transitory or non-volatile storage medium that stores software instructions. When executed by the processor, the software instructions operate various portions of system 2.

The controller 34 is configured to manufacture a three-dimensional article 36 by performing the following operations: (1) operate the laser system 22 and the sensor 26 to align the laser system 22 to the receptacle(s) 10; (2) operate vertical positioning apparatus 34 to position an upper surface 36 (initially an upper surface 38 of the prefabricated body 12) at a build plane 39; (3) operate the laser system 22 to selectively fuse a layer of unfused powder onto the upper surface; (4) repeat steps (2) and (3) to complete manufacture of the three-dimensional article.

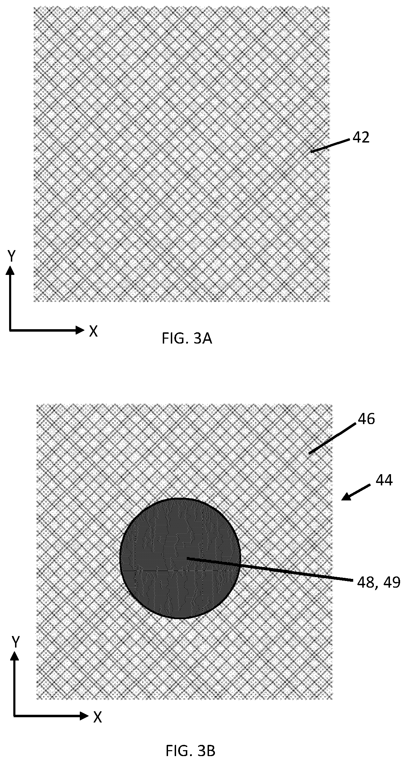

As part of the aligning the laser system 22 to the receptacle(s) 10, the radiation beams are scanned across the upper surface 8 at low power. In an illustrative embodiment, the beams are individually scanned with a cross-hatched pattern 42 as roughly illustrated in FIG. 3A. As the cross-hatch pattern 42 is scanned a signal from the sensor 26 is monitored. The signal is indicative of a reflected intensity versus time. The controller stores information indicative of the reflected signal versus the hatch pattern 42 coordinates.

FIG. 3B depicts a reflected signal pattern 44. Over most of the area, the reflected pattern includes reflected cross hatches 46. As the laser passes over a target 20, the result is an area of a very weak or nearly zero signal is indicated by the dark solid circle 48.

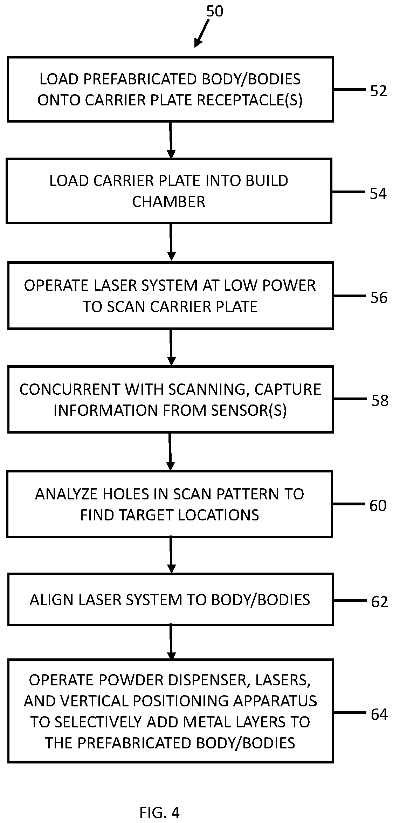

FIG. 4 is a flowchart of an embodiment of a method for manufacturing a three-dimensional article 40 using a three-dimensional printing system 2. According to 52, one or more prefabricated bodies 12 are loaded into one or more corresponding receptacles 10 of a carrier plate 6. Loading of a body 12 into a receptacle places surfaces 16 of body 12 into engagement with datum surfaces 14 in the receptacle 10. According to 54, the carrier plate 6 is loaded into the build chamber 4. In some embodiments, steps 52 and 54 can be performed in reverse.

According to 56, the laser system 22 is operated to scan a low power radiation beam 24 across the upper surface 8 of the carrier plate 6. FIG. 3A depicts a cross hatch scan pattern 42. Concurrent with 58, the controller 34 receives a signal from sensor(s) 26 that is indicative of a reflected radiation intensity. As described earlier, FIG. 3B depicts a reflected signal reflected from a vicinity of a target 20 which is represented by the dark solid circle 48.

According to 60, the controller 34 analyzes the captured signal information from the sensor(s) 26 to find target 20 locations. In an illustrative embodiment, the controller 34 finds points around the edge 49 of the dark solid circle (FIG. 3B) and then computes a center position of the target 20. According to 62, the controller 34 uses the target locations to precisely align the laser system 22 to the body or bodies 12.

According to 64, the controller 34 operates the powder dispenser 28, the laser system 22, and the vertical positioning apparatus to selectively fuse layers of powder upon the prefabricated body 12 to complete manufacturing of the three-dimensional article 40. Step 64 includes a repeated set of operations that were described supra with respect to FIG. 1.

Steps 60 and 62 are based on the fact that the controller 34 stores information indicative of the relative locations of the targets 20 and receptacles 10. The controller 34 has an initial information defining the "expected" locations of the targets 20. When the locations or centers of the targets 20 are determined in step 60, the measured locations are compared with the assumed locations. Corrections are then made for the absolute locations, angular orientation about theta-Z, and scaling factor so that the laser system 22 can accurately align to the receptacle(s) 10 and thus to the body or bodies 12 that are placed in the receptacle(s). The corrections can be made based upon linear matrix transformations applied to the original assumed coordinates.

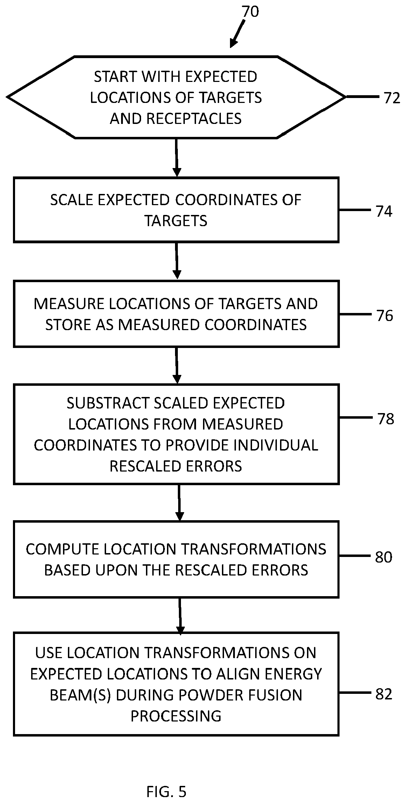

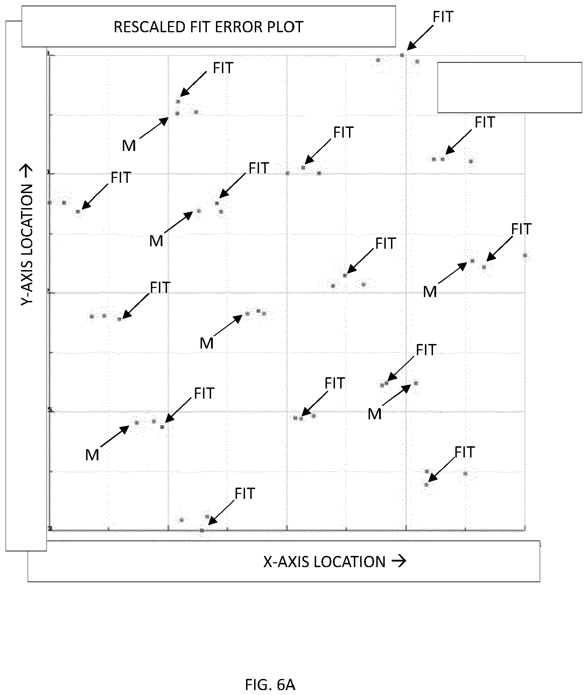

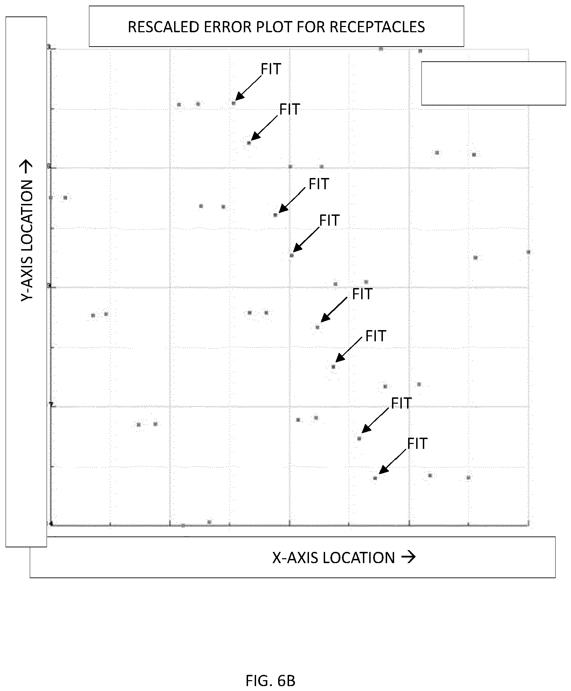

FIG. 5 is a flowchart that is an embodiment of a method 70 that defines a more particular example some steps from FIG. 4. FIGS. 6A and 6B are graphical plots to illustrate the steps of method 70. According to 72, the controller stores "expected" locational coordinates (Xₑₓₚ and Yₑₓₚ) of the receptacles 10 and targets 20. The expected coordinates define where the system initially "expects" to find the receptacles 10 and targets 20. According to 74, the expected locational coordinates can be scaled for convenience. For example, they can be multiplied by a factor such as 0.99 in order to shift a coordinate system.

According to 76, the locations of targets 20 are measured using the laser system 22 and sensor 26. Step 76 corresponds to steps 56-60 of FIG. 4. The result is a set of measured locational coordinates (Xₘ and Yₘ) for the targets 20.

According to 78, rescaled error factors (REₓ, RE_{y}) are computed as a difference between measured and expected coordinate values. REₓ = Xₘ - 0.99 * Xₑₓₚ. RE_{y} = Yₘ-.99 * Y_{exp.} FIG. 6A labels measured error coordinates with an "M". The error data for all of the measured targets 20 are used to compute errors for individual targets which are labeled with a "FIT" in FIG. 6A.

According to 80, the error data for the measured targets 20 are used to generate a transformation function or matrix for transforming expected coordinates (Xₑₓₚ and Yₑₓₚ) to the system of measured locational coordinates (Xₘ and Yₘ). The error data for all of the measured targets 20 are used to compute errors for individual targets which are labeled with a "FIT" in FIG. 6A. FIG. 6B similarly labels the data fit for the receptacles 10.

According to 82, the location transformations from step 80 are used for controlling the laser system 22 during selective fusing of dispensed layers of powder. An advantage of this general method is that the laser system 22 is directly aligned to locations on the carrier plate 6 during a manufacturing process. This is advantageous partly because alignment of laser systems 22 can drift over time which will contribute to locational errors.

## Claims

1. A three-dimensional printing system (2) for manufacturing a three-dimensional article (36) comprising:
a build chamber (4);
a carrier plate (6) defining:
a receptacle (10) for receiving and aligning a prefabricated body (12); and
an alignment target (20) formed into the carrier plate (6) separated from the receptacle (10);
a vertical positioning apparatus (32);
a laser system (22);
a sensor (26), located above the carrier plate (6)
a powder dispenser (28); and
a controller (34) configured to:
operate the laser system at a low power level, which is not capable of fusing powder,
to generate and scan a radiation beam (24) over an upper surface (8) of the carrier plate (6);
concurrent with scanning the radiation beam (24), receive a signal from the sensor (26);
analyze the signal to find locations of the target formed into the carrier plate and to align the radiation beam (24) to the prefabricated body (12); and
operate the vertical positioning apparatus (32), the laser system (22), and the powder dispenser (28) to selectively fuse layers of powder over the prefabricated body (12) to complete manufacture of the three-dimensional article (36)

2. The three-dimensional printing system of claim 1 wherein the receptacle (10) is a recess formed into the upper surface (8) of the carrier plate (6).

3. The three-dimensional printing system of claim 1 or 2 wherein the receptacle (19) includes a plurality of datum surfaces for engaging and aligning outer surfaces (14) of the pre-fabricated body (12) and/or wherein the receptacle (10) includes a plurality of receptacles (10) arranged across the upper surface (8) of the carrier plate (6).

4. The three-dimensional printing system according to claims 1 to 3 wherein the alignment target (20) includes a plurality of openings that pass through the carrier plate (6), wherein the openings are preferably circular.

5. The three-dimensional printing system according to claims 1 to 3 wherein the alignment target (20) is a recess formed into the carrier plate (6), the recess including a bottom surface having a radiation absorbing coating.

6. The three-dimensional printing system according to claims 1 to 5 wherein the sensor (26) is above the carrier plate (6) and/or wherein the sensor (26) includes a plurality of sensors (26), analysis includes combining the signals from the plurality of sensors (26) to improve accuracy.

7. The three-dimensional printing system according to claims 1 to 6 wherein analyzing the signal includes finding points along an edge of a target and then computing a center location of the target.

8. A method of manufacturing a three-dimensional article comprising:
loading a prefabricated body (12) into a receptacle (10) formed into an upper surface (8) of a carrier plate (6);
loading the carrier plate (6) into a build chamber (4);
operating a laser system (22) at a low power level which is not capable of fusing powder to initially scan a radiation beam (24) over the upper surface of the carrier plate (6);
concurrent with initially scanning the radiation beam (24), receiving a signal from a sensor (26) indicative of a reflected intensity of radiation from the upper surface (8);
analyzing the signal to find locations of targets formed into the carrier plate and to align the laser system to the receptacle (10); and
operating a powder dispenser (28), the laser system (22), and a vertical positioning apparatus (32) to selectively fuse layers of material over the pre-fabricated body (12) and to complete manufacture of the three-dimensional article (36).

9. The method of claim 8 wherein the prefabricated body (12) is loaded into the receptacle (10) before the carrier plate (6) is loaded into the chamber.

10. The method of claim 8 or 9 wherein loading the prefabricated body (12) into the receptacle (10) includes engaging outer surfaces of the prefabricated body (12) with receptacle datum surfaces and/or wherein loading the prefabricated body (12) includes loading a plurality of the prefabricated bodies (12) into a corresponding plurality of receptacles (10) across the upper surface (8) of the carrier plate (6).

11. The method according to claims 8 to 10 wherein finding locations of targets individually includes identifying locations along an edge of an opening having a geometry shape and then computing a particular location of the opening based upon the identified locations.

12. The method of claim 11 wherein the opening is circular and the particular location is a center of the opening.

13. The method according to claims 8 to 12 wherein finding locations of targets include finding locations of at least three separate openings formed into the carrier plate (6).

## Patentansprüche

1. Dreidimensionales Drucksystem (2) zur Herstellung eines dreidimensionalen Artikels (36), das aufweist
eine Baukammer (4);
eine Trägerplatte (6), die Folgendes definiert:
eine Aufnahme (10) zum Aufnehmen und Ausrichten eines vorgefertigten Körpers (12); und
ein Ausrichtungsziel (20), das von der Aufnahme (10) getrennt in die
Trägerplatte (6) eingeformt ist;
eine vertikale Positioniervorrichtung (32);
ein Lasersystem (22);
einen Sensor (26), der sich oberhalb der Trägerplatte (6) befindet;
eine Pulverausgabe (28); und
eine Steuervorrichtung (34), die für Folgendes ausgebildet ist:
Betätigen des Lasersystems bei einer niedrigen Leistungsstufe, die nicht in der Lage ist, Pulver zu schmelzen, um einen Strahl (24) zu erzeugen und diesen über eine obere Fläche (8) der Trägerplatte (6) abzutasten;
gleichzeitig mit dem Abtasten des Strahls (24), Empfangen eines Signals von dem Sensor (26);
Analysieren des Signals, um Positionen des in die Trägerplatte eingeformten Ziels zu finden und den Strahl (24) mit dem vorgefertigten Körper (12) auszurichten; und
Betätigen der vertikalen Positioniervorrichtung (32), des Lasersystems (22) und der Pulverausgabe (28) zum selektiven Aufschmelzen von Pulverschichten über dem vorgefertigten Körper (12), um die Herstellung des dreidimensionalen Artikels (36) abzuschließen.

2. Dreidimensionales Drucksystem nach Anspruch 1, wobei die Aufnahme (10) eine in die obere Fläche (8) der Trägerplatte (6) eingeformte Aussparung ist.

3. Dreidimensionales Drucksystem nach Anspruch 1 oder 2, wobei die Aufnahme (19) eine Vielzahl von Bezugsflächen aufweist, um mit Außenflächen (14) des vorgefertigten Körpers (12) zusammenzugreifen und diese auszurichten und/oder wobei die Aufnahme (10) eine Vielzahl von Aufnahmen (10) aufweist, die über die obere Fläche (8) der Trägerplatte (6) verteilt angeordnet sind.

4. Dreidimensionales Drucksystem nach Anspruch 1 bis 3, wobei das Ausrichtungsziel (20) eine Vielzahl von Öffnungen aufweist, die durch die Trägerplatte (6) hindurch verlaufen, wobei die Öffnungen vorzugsweise kreisförmig sind.

5. Dreidimensionales Drucksystem nach Anspruch 1 bis 3, wobei das Ausrichtungsziel (20) eine in die Trägerplatte (6) eingeformte Vertiefung ist, wobei die Vertiefung eine untere Fläche mit einer strahlungsabsorbierenden Beschichtung aufweist.

6. Dreidimensionales Drucksystem nach Anspruch 1 bis 5, wobei der Sensor (26) oberhalb der Trägerplatte (6) ist und/oder wobei der Sensor (26) eine Vielzahl von Sensoren (26) aufweist, wobei die Analyse das Kombinieren der Signale von der Vielzahl von Sensoren (26) zur Verbesserung der Genauigkeit umfasst.

7. Dreidimensionales Drucksystem nach Anspruch 1 bis 6, wobei das Analysieren des Signals das Finden von Punkten entlang einem Rand eines Ziels und anschließend das Berechnen einer zentralen Position des Ziels umfasst.

8. Verfahren zur Herstellung eines dreidimensionale Artikels, das umfasst:
Einlegen eines vorgefertigten Körpers (12) in eine Aufnahme (10), der in einer oberen Fläche (8) der Trägerplatte (6) eingeformt ist;
Einlegen der Trägerplatte (6) in eine Baukammer (4);
Betätigen eines Lasersystems (22) bei einer niedrigen Leistungsstufe, die nicht in der Lage ist, Pulver zu schmelzen, um zunächst einen Strahl (24) über die obere Fläche der Trägerplatte (6) abzutasten;
gleichzeitig mit dem Abtasten des Strahls (24), Empfangen eines Signals von einem Sensor (26), das eine reflektierte Strahlungsintensität von der oberen Fläche (8) angibt;
Analysieren des Signals zum Finden von Positionen des in die Trägerplatte eingeformten Ziels und zum Ausrichten des Lasersystems mit der Aufnahme (10); und
Betätigen einer Pulverausgabe (28), des Lasersystems (22) und einer vertikalen Positioniervorrichtung (32) zum selektiven Aufschmelzen von Materialschichten über dem vorgefertigten Körper (12) und zum Abschließen der Herstellung des dreidimensionalen Artikels (36).

9. Verfahren nach Anspruch 8, wobei sich der vorgefertigte Körper (12) in der Aufnahme (10) befindet bevor die Trägerplatte (6) in die Kammer eingelegt wird.

10. Verfahren nach Anspruch 8 oder 9, wobei das Einlegen des vorgefertigten Körpers (12) in die Aufnahme (10) das Zusammengreifen der Außenflächen des vorgefertigten Körpers (12) mit Aufnahmebezugsflächen umfasst und/oder wobei das Einlegen des vorgefertigten Körpers (12) das Einlegen einer Vielzahl der vorgefertigten Körper (12) in eine entsprechende Vielzahl von Aufnahmen (10) verteilt über die obere Fläche (8) der Trägerplatte (6) umfasst.

11. Verfahren nach Anspruch 8 bis 10, wobei das individuelle Finden von Positionen von Zielen das Identifizieren der Position entlang eines Randes einer Öffnung, die eine geometrische Form aufweist, und anschließend das Berechnen einer bestimmten Position der Öffnung basierend auf den identifizierten Positionen umfasst.

12. Verfahren nach Anspruch 11, wobei die Öffnung kreisförmig ist und die bestimmte Position eine Mitte der Öffnung ist.

13. Verfahren nach Anspruch 8 bis 12, wobei das Finden der Position von Zielen das Finden von Positionen von mindestens drei separaten Öffnung umfasst, die in die Trägerplatte (6) eingeformt sind.

## Revendications

1. Système d'impression tridimensionnel (2) destiné à fabriquer un article tridimensionnel (36) comprenant :
une chambre de fabrication (4) ;
une plaque de support (6) définissant :
un réceptacle (10) pour recevoir et aligner un corps préfabriqué (12) ; et
une cible d'alignement (20) formée dans la plaque de support (6) séparée du réceptacle (10) ;
un appareil de positionnement vertical (32) ;
un système laser (22) ;
un capteur (26), situé au-dessus de la plaque de support (6)
un distributeur de poudre (28) ; et
un dispositif de commande (34) configuré pour :
faire fonctionner le système laser à un faible niveau de puissance, qui n'est pas capable de faire fondre de la poudre, pour générer et balayer un faisceau de rayonnement (24) sur une surface supérieure (8) de la plaque de support (6) ;
en même temps que le balayage du faisceau de rayonnement (24), recevoir un signal du capteur (26) ;
analyser le signal pour trouver les emplacements de la cible formée dans la plaque de support et
pour aligner le faisceau de rayonnement (24) sur le corps préfabriqué (12) ; et
faire fonctionner l'appareil de positionnement vertical (32), le système laser (22) et le distributeur de poudre (28) pour faire fondre sélectivement des couches de poudre sur le corps préfabriqué (12) pour terminer la fabrication de l'article tridimensionnel (36).

2. Système d'impression tridimensionnel selon la revendication 1, le réceptacle (10) étant un évidement formé dans la surface supérieure (8) de la plaque de support (6).

3. Système d'impression tridimensionnel selon la revendication 1 ou 2, le réceptacle (19) comportant une pluralité de surfaces de référence pour entrer en prise avec et aligner les surfaces extérieures (14) du corps préfabriqué (12) et/ou le réceptacle (10) comprenant une pluralité de réceptacles (10) agencés à travers la surface supérieure (8) de la plaque de support (6).

4. Système d'impression tridimensionnel selon les revendications 1 à 3, la cible d'alignement (20) comportant une pluralité d'ouvertures qui traversent la plaque de support (6), les ouvertures étant de préférence circulaires.

5. Système d'impression tridimensionnel selon les revendications 1 à 3, la cible d'alignement (20) étant un évidement formé dans la plaque de support (6), l'évidement comportant une surface inférieure ayant un revêtement absorbant le rayonnement.

6. Système d'impression tridimensionnel selon les revendications 1 à 5, le capteur (26) étant au-dessus de la plaque de support (6) et/ou le capteur (26) comportant une pluralité de capteurs (26), l'analyse comportant la combinaison des signaux amenant la pluralité de capteurs (26) à améliorer la précision.

7. Système d'impression tridimensionnel selon les revendications 1 à 6, l'analyse du signal comportant la recherche de points le long d'un bord d'une cible et ensuite le calcul d'un emplacement central de la cible.

8. Procédé de fabrication d'un article tridimensionnel comprenant :
la charge d'un corps préfabriqué (12) dans un réceptacle (10) formé dans une surface supérieure (8) d'une plaque de support (6) ;
la charge de la plaque de support (6) dans une chambre de fabrication (4) ;
la mise en fonctionnement d'un système laser (22) à un faible niveau de puissance qui n'est pas capable de faire fondre de la poudre pour balayer initialement un faisceau de rayonnement (24) sur la surface supérieure de la plaque de support (6) ;
en même temps que le balayage initial du faisceau de rayonnement (24), la réception d'un signal provenant d'un capteur (26) indiquant une intensité réfléchie de rayonnement provenant de la surface supérieure (8) ;
l'analyse du signal pour trouver des emplacements de cibles formées dans la plaque de support et pour aligner le système laser sur le réceptacle (10) ; et
la mise en fonctionnement d'un distributeur de poudre (28), du système laser (22) et d'un appareil de positionnement vertical (32) pour faire fondre sélectivement des couches de matériau sur le corps préfabriqué (12) et pour terminer la fabrication de l'article tridimensionnel (36).

9. Procédé selon la revendication 8, le corps préfabriqué (12) étant chargé dans le réceptacle (10) avant que la plaque de support (6) ne soit chargée dans la chambre.

10. Procédé selon la revendication 8 ou 9, la charge du corps préfabriqué (12) dans le réceptacle (10) comportant la prise des surfaces extérieures du corps préfabriqué (12) avec les surfaces de référence du réceptacle et/ou le chargement du corps préfabriqué (12) comportant le chargement d'une pluralité de corps préfabriqués (12) en une pluralité correspondante de réceptacles (10) à travers la surface supérieure (8) de la plaque de support (6).

11. Procédé selon les revendications 8 à 10, la recherche d'emplacements de cibles individuellement comportant l'identification d'emplacements le long d'un bord d'une ouverture ayant une forme géométrique, puis le calcul d'un emplacement particulier de l'ouverture sur la base des emplacements identifiés.

12. Procédé selon la revendication 11, l'ouverture étant circulaire et l'emplacement particulier étant un centre de l'ouverture.

13. Procédé selon les revendications 8 à 12, la recherche d'emplacements de cibles comportant la recherche d'emplacements d'au moins trois ouvertures séparées formées dans la plaque de support (6).
